# EUROPEAN PATENT APPLICATION

(11) **EP 3 722 186 A1**
(43) Date of publication of application: **14.10.2020**
(21) Application number: 18885339.4
(22) Date of filing: 05.12.2018
(51) Int. Cl.: B62D 25/20

(54) **CROSS BEAM FOR VEHICLE FLOOR, VEHICLE FLOOR, ALUMINUM ALLOY EXTRUSION FORMED MEMBER AND VEHICLE**

(30) Priority: 08.12.2017 CN 201711290108
(71) Applicant: Nio Nextev Limited, Hong Kong (CN)
(72) Inventor: JING, Haitao, Hong Kong (CN); CHENG, Ming, Hong Kong (CN); YANG, Chuanyi, Hong Kong (CN); LI, Shuo, Hong Kong (CN); SHEN, Xuekai, Hong Kong (CN); ZHENG, Wang, Hong Kong (CN); QIN, Le, Hong Kong (CN); CHENG, Haidong, Hong Kong (CN)
(74) Representative: Vossius & Partner Patentanwälte Rechtsanwälte mbB
(86) International application number: PCT/CN2018/119327
(87) International publication number: WO 2019/109939

(57) **Abstract**

Provided are a cross beam for a vehicle floor, a vehicle floor, an aluminium alloy extrusion moulded member and a vehicle. The cross beam (1) is an aluminium alloy extrusion moulded member and is provided with an accommodation portion (4) and assembly portions (2), wherein the assembly portions (2) are arranged on the cross beam (1) in a cold mechanical connection manner and/or a hot mechanical connection manner, such that one or more vehicle components are at least partially mounted and accommodated inside the accommodation portion (4) by means of the assembly portions (2). The structure can ensure the mounting reliability of the vehicle component(s) and the mechanical performance of the cross beam for the vehicle floor, thereby improving the safety and the reliability of a vehicle.

## Description

### Technical Field

The invention relates to the technical field of vehicles, in particular to a cross beam for a vehicle floor, a vehicle floor, an aluminium alloy extrusion moulded member and a vehicle.

### Background Art

Various types of vehicles are widely used in daily work and life of people, and the safety and reliability of the vehicles have increasingly become the focus of attention. However, existing vehicles still have some drawbacks and disadvantages in terms of safety design, which have not yet effectively solved. For example, with the continuous progress of science and technology, many types of new energy vehicles, such as battery electric vehicles and hybrid electric vehicles, are increasingly used, but these new vehicles still have several problems, such as undesirable local thermal deformation of floor beams due to welding heat in some cases when it is necessary to weld some vehicle components, such as vehicle-mounted battery cases, onto the cross beams of the vehicle floors. In addition, there are also higher requirements for the flexible mounting arrangement, dimensional accuracy, etc. of the vehicle components. Accordingly, it is quite necessary for research and improvement in light of the existing problems or deficiencies, including those set forth above.

### Summary of the Invention

In view of this, the invention provides a cross beam for a vehicle floor, a vehicle floor, an aluminium alloy extrusion moulded member and a vehicle, to effectively solve the above and others problems existing in the prior art.

First, according to a first aspect of the invention, there is provided a cross beam for a vehicle floor. The cross beam is an aluminium alloy extrusion moulded member and is configured to be provided with an accommodation portion and assembly portions, wherein the assembly portions are arranged on the cross beam in a cold mechanical connection manner and/or a hot mechanical connection manner, such that one or more vehicle components are at least partially mounted and accommodated inside the accommodation portion by means of the assembly portions.

In the cross beam for a vehicle floor according to the invention, optionally, the assembly portions comprise:
one or more first assembly portions arranged on an outer surface of the cross beam; and
one or more second assembly portions arranged inside the accommodation portion and used for supporting the vehicle component(s).

In the cross beam for a vehicle floor according to the invention, optionally, the second assembly portion comprises a pair of lugs provided on two sides of an inner wall of the accommodation portion.

In the cross beam for a vehicle floor according to the invention, optionally, the cross beam further comprises a reinforcing portion arranged adjacent to the accommodation portion and used for increasing the rigidity and strength of the cross beam.

In the cross beam for a vehicle floor according to the invention, optionally, the reinforcing portion is configured to have a cavity structure.

In the cross beam for a vehicle floor according to the invention, optionally, the vehicle component is further partially accommodated in a space between the cross beam and the vehicle floor.

In the cross beam for a vehicle floor according to the invention, optionally, the vehicle component is a battery module for outputting power to a vehicle.

Next, according to a second aspect of the invention, there is also provided a vehicle floor comprising at least one cross beam for a vehicle floor as described in any one of the above.

In the vehicle floor according to the invention, optionally, the vehicle floor further comprises at least one cross beam in the form of a steel stamped member.

Furthermore, according to a third aspect of the invention, there is also provided an aluminium alloy extrusion moulded member used for a cross beam for a vehicle floor as described in any one of the above.

In addition, according to a fourth aspect of the invention, there is also provided a vehicle, comprising a cross beam for a vehicle floor as described in any one of the above, or a vehicle floor as described above, or at least one aluminium alloy extrusion moulded member as described above, wherein the vehicle includes a battery electric vehicle and a hybrid electric vehicle.

Compared with the prior art, a vehicle component such as a battery module for outputting power to a vehicle can be very firmly mounted onto a cross beam for a vehicle floor by adopting the technical solution provided by the invention, the problems of local thermal deformation of the cross beam of the vehicle floor caused by heat generated by means of welding can also be effectively avoided or eliminated, flexible mounting of the vehicle component on the cross beam of the vehicle floor can also be realized, and a good dimensional accuracy is guaranteed. By applying the invention, it is possible to ensure the mounting reliability of the vehicle component on the cross beam of the vehicle floor and the mechanical performance of the cross beam of the vehicle floor, and to improve the safety reliability of the vehicle.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.
Fig. 1 is a schematic perspective structural view of an embodiment of a cross beam for a vehicle floor according to the invention.
Fig. 2 is a schematic cross-sectional structural view of the embodiment of the cross beam shown in Fig. 1.
Fig. 3 is a schematic perspective structural view of another embodiment of the cross beam for a vehicle floor according to the invention.
Fig. 4 is a schematic cross-sectional structural view of the embodiment of the cross beam shown in Fig. 3.

### Detailed Description of Embodiments

First, it should be noted that the specific structures, compositions, characteristics, advantages, etc. of a cross beam for a vehicle floor, a vehicle floor, an aluminium alloy extrusion moulded member and a vehicle according to the invention will be specifically described below by way of example, however, all the descriptions are intended to be illustrative only and should not be construed as limiting the invention in any way.

Furthermore, unless otherwise specified herein, the various parts, components, features or devices, etc. referred to in the technical solutions of the invention are allowed to be arbitrarily combined to form further embodiments that may not be explicitly described herein. Additionally, in order to simplify the figures, the same or similar parts and features may only be marked at one or several places in one and the same figure.

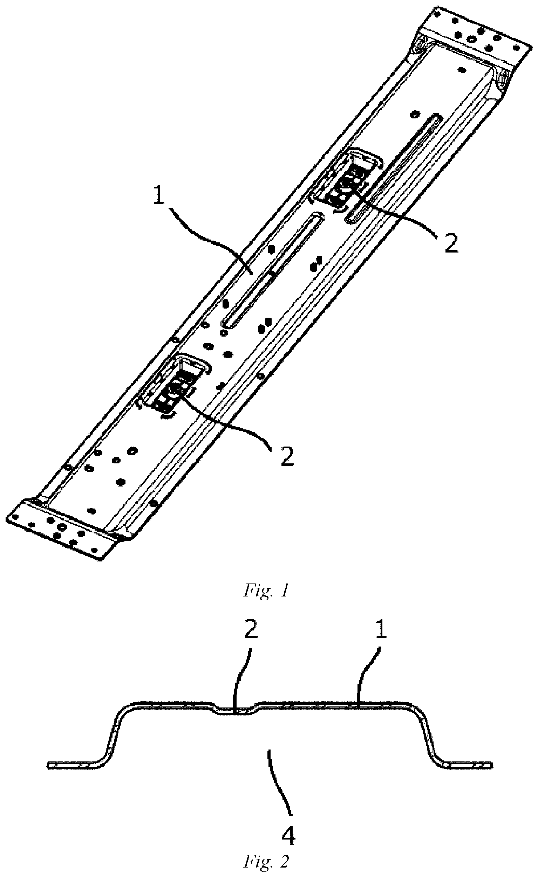

Referring to Figs. 1 and 2 in combination, the basic structure of an embodiment of a cross beam for a vehicle floor is shown exemplarily. In this embodiment, an aluminium alloy extrusion moulded member is used as the cross beam, and the cross beam 1 is provided with assembly portions 2 and an accommodation portion 4, which are described in detail below.

In the prior art, a cross beam component in a vehicle floor is generally formed from a steel stamped sheet and is disposed on the vehicle floor, whereas the cross beam 1 for the vehicle floor of the invention is the aluminium alloy extrusion moulded member, so that it is very convenient to stamp the cross beam of the vehicle floor into a desired cross-sectional shape or configuration. In particular, the accommodation portion 4 can be flexibly formed to meet various specific application requirements. Then, one or more assembly portions 2 may be securely arranged on an outer surface of the cross beam 1, for example, using a hot mechanical connection manner such as welding, such that one or more vehicle components (e.g., a battery module for outputting power to a vehicle, etc.) can be partially or wholly mounted and accommodated inside the accommodation portion 4 of the cross beam 1 by means of such assembly portions 2. By way of example, since there is a space between the cross beam 1 and the vehicle floor itself, a part of the vehicle component(s) may be placed in this space and suspended from the cross beam 1. As described above, the assembly portions are arranged on the cross beam in the hot mechanical connection manner, which is applicable in the case where the mounting position of the vehicle component to be mounted on the cross beam is relatively fixed without the need for flexible arrangement.

The vehicle component includes, but is not limited to, the battery module for outputting power to the vehicle. It should be understood that the battery module comprises at least a battery cell and a housing enclosing the battery cell, as well as other parts and components required for power output, and in some cases, the battery module may also comprise a component matching a mounting location on the cross beam of the vehicle so as to mount the battery module to the mounting location. At some points in the text of this application, the battery module is also referred to as a 'vehicle-mounted battery', but this does not limit that the battery module should always be placed inside the vehicle during its life cycle. For example, in a battery swap mode, the battery module can be detached from the vehicle due to the need for a quick swap operation. By way of example only, if a battery swap mode of a battery electric vehicle is to be achieved, it is necessary to arrange a number of vehicle-mounted battery suspension points on a vehicle body. Therefore, a number of cross beams 1 can be provided in the above manner in consideration of the strength and maintainability requirements of the vehicle-mounted battery suspension points, and each of the cross beams 1 is provided with the assembly portions 2 and the accommodation portion 4 as described above for mounting and accommodating the vehicle components to be mounted inside the accommodation portions 4 of the cross beams 1 to meet practical application requirements.

It may have any suitable structural configuration for the assembly portions 2, which are also allowed to match corresponding structures on the vehicle components to be mounted, for mounting the vehicle components onto the cross beams 1. However, it should be noted that in the invention, the specific set numbers, arrangement positions, structural shapes, sizes, etc. of the assembly portions 2 on the cross beam 1 may be flexibly designed and selected according to the practical application without departing from the spirit of the invention, so as to provide the desired mounting and fastening points to better meet the requirements for the mechanical properties of the cross beam, the structural strength of the vehicle body, the reliability of the whole vehicle, etc.

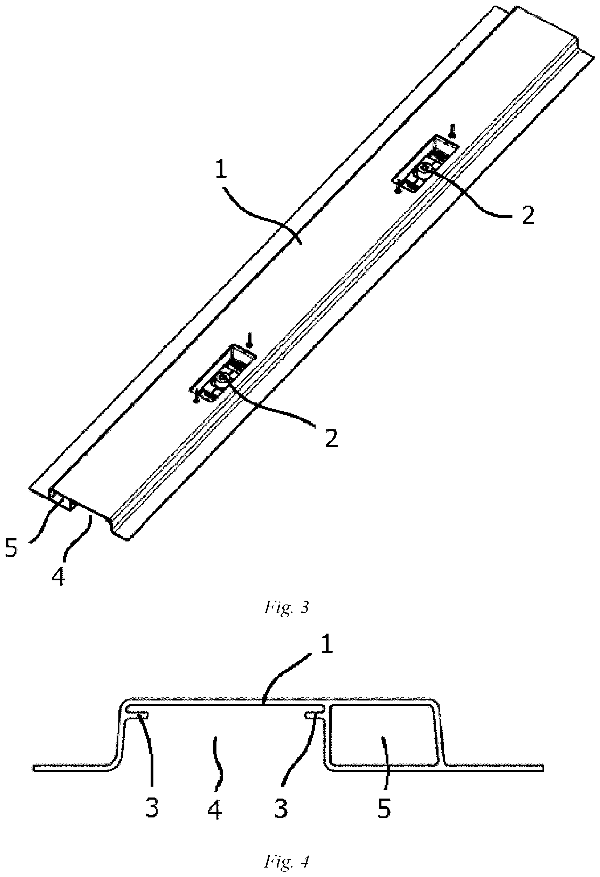

Next, referring to Figs. 3 and 4 in combination, the basic structure of another embodiment of the cross beam for the vehicle floor is also approximately shown only by way of example. In this embodiment, an aluminium alloy extrusion moulded member is still used as the cross beam, and the cross beam 1 is provided with optional assembly portions 3 and a reinforcing portion 5 in addition to the assembly portions 2 and the accommodation portion 4, which are described in detail below.

As shown in Fig. 3, one or more assembly portions 2 may be provided on the outer surface of the cross beam 1 in a cold mechanical connection manner (e.g., riveting, screwing, etc., or a combination thereof), and the assembly portions 3 may be formed inside the accommodation portion 4 of the cross beam 1 by means of a stamping process or a cold mechanical connection manner, to support the vehicle component(s) described above. For example, it is exemplarily illustrated in Fig. 4 that the assembly portion 3 may comprise a pair of lugs, which are respectively provided on two sides of an inner wall of the accommodation portion 4 of the cross beam 1. It goes without saying that, in practical applications, the invention absolutely allows the interior of the accommodation portion 4 to be provided with assembly portions 3 in any other suitable structural shapes, and that, without departing from the spirit of the invention, the specific set numbers, arrangement positions, etc. of such assembly portions 3 may also be flexibly designed and selected according to the practical application.

In this embodiment, a cold mechanical connection manner is used. This is more reliable for certain floor cross beams that are susceptible to deformation due to welding heat, as well as vehicle bodies that employ such cross beams, since no welding heat is generated in the cold mechanical connection process, as compared to the hot mechanical connection manner such as welding. In addition, the dimensional accuracy can be better guaranteed by adopting the cold mechanical connection manner, and the flexible arrangement and reliability requirements of vehicle component mounting positions are met.

In an optional case, a reinforcing portion 5 arranged on the cross beam 1 is also shown in the cross beam embodiment illustrated in Figs. 3 and 4, and is arranged in the vicinity of the accommodation portion 4 for increasing the rigidity and strength of the cross beam 1, such that the mechanical properties of the cross beam and the vehicle body are ensured after the vehicle component(s) (such as the battery module for outputting power to the vehicle) is mounted on the cross beam 1 is a suspended manner, and the safety and reliability of the vehicle are improved. By way of example, the reinforcing portion 5 may be configured to have a cavity structure, thereby not only reducing the weight of the cross beam, but also saving on material. It should be understood that the reinforcing portion 5 is also allowed to be implemented in any other suitable structural form without departing from the spirit of the invention.

In addition, according to another technical solution of the invention, there is also provided a vehicle floor comprising at least one cross beam for a vehicle floor designed according to the invention. For example, the cross beam may be arranged in, for example, a front floor of a vehicle, mounted laterally between a left rocker panel and a right rocker panel, and a plurality of such cross beams may also be arranged at intervals between the left rocker panel and the right rocker panel so as to better satisfy practical application requirements without departing from the spirit of the invention. Furthermore, in an optional case, the vehicle floor may also comprise one or more cross beams which are steel stamped members such that the cross beams can match and be combined with the cross beams which are aluminium alloy extrusion moulded members discussed above to meet various possible application requirements. The specific set numbers, arrangement positions, etc. of the cross beams in the form of the aluminium alloy extrusion moulded members, and/or the cross beams in the form of the steel stamped members can be specifically designed and selected depending on the practical application without departing from the spirit of the invention. They can not only support and suspend the vehicle component, such as the battery module for outputting power to the vehicle, to increase the strength of the vehicle body, particularly improve the side impact performance of the vehicle, and but can also allow components such as a vehicle seat to be mounted and fixed to the above cross beams in the form of the aluminium alloy extrusion moulded members or steel stamped members. It can be understood that the vehicle floor described above includes, but is not limited to, the front floor of the vehicle, etc.

In addition, according to yet another technical solution of the invention, there is also provided an aluminium alloy extrusion moulded member of a cross beam for a vehicle floor designed according to the invention, for example, the cross beam 1 illustrated schematically in Figs. 1 to 4 is in the form of such an aluminium alloy extrusion moulded member. For such an aluminium alloy extrusion moulded member, the cross-sectional shape thereof may be adjusted to meet the mounting requirements for different vehicle components, the requirements for vehicle models with different performances, or the requirements for vehicle models with different wheelbases according to practical requirements without departing from the spirit of the invention, and the length of the aluminium alloy extrusion moulded member may also be adjusted to meet the requirements for vehicle models with different track widths according to demands.

Finally, according to still another technical solution of the invention, there is also provided a vehicle including, but not limited to, a battery electric vehicle, a hybrid electric vehicle, etc. The vehicle is provided with a cross beam for a vehicle floor designed according to the invention, or comprises a vehicle floor designed according to the invention, or comprises one or more aluminium alloy extrusion moulded members designed according to the invention. As described above, it will be readily understood that the cross beam in the form of the aluminium alloy extrusion moulded member designed according to the invention may be mounted and fixed to a floor structure of the vehicle, and such a floor structure may be mounted onto the vehicle body, so that the technical advantages of the invention as described above, which are remarkably superior to the prior art, can be fully utilized, the desired vehicle component is firmly mounted to the cross beam of the vehicle floor, the mechanical properties of the cross beam for the vehicle body are ensured, and the safety performance of the vehicle is improved.

The cross beam for a vehicle floor, the vehicle floor, the aluminium alloy extrusion moulded member and the vehicle according to the invention are merely illustrated in detail as above by way of example. These examples are only for the purpose of illustrating the principle of the invention and the implementations thereof, rather than limiting the invention. Those skilled in the art can make various variations and improvements without departing from the spirit and scope of the invention. For example, although the use of the cold mechanical connection manner and of the hot mechanical connection manner to arrange the assembly portions on the cross beam 1 are discussed separately in the forgoing two embodiments, the combined use of both the above two mechanical connection manners is allowed in practical applications. Therefore, all equivalent technical solutions should fall within the scope of the invention and be defined by the claims of the invention.

## Claims

1. A cross beam for a vehicle floor, **characterized in that** the cross beam is an aluminium alloy extrusion moulded member and is provided with an accommodation portion and assembly portions, wherein the assembly portions are arranged on the cross beam in a cold mechanical connection manner and/or a hot mechanical connection manner, such that one or more vehicle components are at least partially mounted and accommodated inside the accommodation portion by means of the assembly portions.

2. The cross beam for a vehicle floor according to claim 1, **characterized in that** the assembly portions comprise:
one or more first assembly portions arranged on an outer surface of the cross beam; and
one or more second assembly portions arranged inside the accommodation portion and used for supporting the vehicle component(s).

3. The cross beam for a vehicle floor according to claim 2, **characterized in that** the second assembly portion comprises a pair of lugs provided on two sides of an inner wall of the accommodation portion.

4. The cross beam for a vehicle floor according to claim 1, 2 or 3, **characterized in that** the cross beam further comprises a reinforcing portion arranged adjacent to the accommodation portion and used for increasing the rigidity and strength of the cross beam.

5. The cross beam for a vehicle floor according to claim 4, **characterized in that** the reinforcing portion is configured to have a cavity structure.

6. The cross beam for a vehicle floor according to claim 1, 2 or 3, **characterized in that** the vehicle component is further partially accommodated in a space between the cross beam and the vehicle floor.

7. The cross beam for a vehicle floor according to claim 6, **characterized in that** the vehicle component is a battery module for outputting power to a vehicle.

8. A vehicle floor, **characterized by** comprising at least one cross beam for a vehicle floor according to any one of claims 1-7.

9. The vehicle floor according to claim 8, **characterized by** further comprising at least one cross beam in the form of a steel stamped member.

10. An aluminium alloy extrusion moulded member, used for a cross beam for a vehicle floor according to any one of claims 1-7.

11. A vehicle, **characterized by** comprising a cross beam for a vehicle floor according to any one of claims 1-7, or a vehicle floor according to claim 8 or 9, or at least one aluminium alloy extrusion moulded member according to claim 10, wherein the vehicle includes a battery electric vehicle and a hybrid electric vehicle.
